# EUROPEAN PATENT SPECIFICATION

(11) **EP 1 560 217 B1**
(45) Date of publication and mention of the grant of the patent: **09.04.2014**
(21) Application number: 05250421.4
(22) Date of filing: 27.01.2005
(51) Int. Cl.: G11B 20/18

(54) **Recording-medium evaluation method, recording/reproduction apparatus and recording medium**
Verfahren zur Auswertung eines Aufzeichnungsmediums, Aufzeichnungs-/Wiedergabevorrichtung und Aufzeichnungsmedium
Procédé d'évaluation d'un support d'enregistrement, appareil d'enregistrement/de reproduction et support d'enregistrement

(30) Priority: 30.01.2004 JP 2004022600
(43) Date of publication of application: 03.08.2005
(73) Proprietor: Sony Corporation, Tokyo 141 (JP)
(72) Inventor: Kobayashi, Shoei, Shinagawa-ku Tokyo (JP); Akimoto, Yoshihiro, Shinagawa-ku Tokyo (JP)
(74) Representative: Horner, David Richard

(56) References cited:
- EP-A- 0 506 471
- EP-A- 1 262 971
- WO-A-02/052558
- US-A- 5 422 890
- US-A- 5 760 982

## Description

The present invention relates to a recording medium such as an optical disc, a method for evaluating the recording medium and a recording/reproduction apparatus for the recording medium. More particularly, the present invention relates to a write-once recording medium onto which data can be written, a method for evaluating the recording medium and a recording/reproduction apparatus for the recording medium.

An example of a technology for recording digital data onto recording media and reproducing digital data from the recording media is a data-recording/reproduction technology using an optical disc such as a magneto optical disc as recording media. Examples of the optical disc are a CD (Compact Disc), an MD (MiniDisc) and a DVD (Digital Versatile Disc). The optical disc is a generic name of recording media made of a thin metallic plate having the form of a disc protected by plastic and allowing data recorded thereon to be read out by radiation of a laser beam thereto.

The optical disc can have a read-only type or recordable type. Commonly known examples of the read-only optical disc are the CD, a CD-ROM and a DVD-ROM. The recordable optical disc allows user data to be written thereon. Generally known examples of the recordable optical disc include the MD, a CD-R, a CD-RW, a DVD-R, a DVD-RW, a DVD+RW and a DVD-RAM. Data is written onto a recordable optical disc by utilization of techniques such as a magneto optical recording method, a phase change recording method and a pigment film change recording method. The pigment film change recording method is also referred to as a write-once recording method. Since the write-once recording method allows only data to be written onto a recordable optical disc and thus prevents recorded data from being rewritten, the disc is suitable for typically applications to preserve data recorded thereon. On the other hand, the magneto optical recording method and the phase change recording method allow data already recorded on a recordable disc to be rewritten and are thus adopted in a variety of applications such as mainly an application to record a variety of contents including music, video, games and application programs.

In addition, in recent years, a high-density optical disc known as a Blu-ray disc is being developed and high mass production of the disc has been planned.

A high-density optical disc such as the Blu-ray disc has a structure including a cover layer with a thickness of 0.1 mm in the direction of the disc thickness. The high-density optical disc allows phase-change marks to be recorded thereon and recorded phase-change marks to be reproduced under a condition of combining the so-called blue laser, which is a laser with a wavelength of 405 mm, and an object lens with an NA of 0.85. The high-density optical disc uses a data block having a size of 64 KB (kilobytes) as a recording/reproduction unit. With the high-density optical disc formatted at an efficiency of 82%, data having an amount of 23.3 GB (gigabytes) can be recorded onto the disc provided that the disc has a track pitch of 0.32 µm, a line density of 0.12 µm/bit and a diameter of 12 cm.

In addition, with the same format, a high-density optical disc with a line density of 0.112 µm/bit can be used for recording data up to 25 GB.

On the top of that, if the recording layer can be designed into a multi-layer structure, a much larger recording capacity can be realized. For example, if the recording layer can be designed into a multi-layer structure, the recording capacity can be doubled to 46.6 GB for a line density of 0.12 µm/bit or 50 GB for a line density of 0.112 µm/bit.

By the way, in the case of the DVD-ROM read-only optical disc, which is one the various optical discs described above, for example, data is basically recorded in advance typically as emboss pits created on the disc in error correction block units.

As a data format of or the conventional read-only optical disc, error correction block units are recorded successively without being interrupted by spaces or gaps.

This means that an error correction block unit is a block used as a recording/reproduction unit and there is no linking area created between any two adjacent blocks.

Even in the case of a recordable disc allowing data to be recorded thereon and recorded data to be reproduced, basically, data is recorded onto the disc in error correction block units and data already recorded on the disc is reproduced in same block units in the same way as a read-only disc.

Since data is written onto the disc in a random-access recording process, however, a linking area may be created between blocks in some cases.

With a linking area used, implementation of random accesses to blocks in a recording/reproduction apparatus offers a merit of the need to use only simple and inexpensive hardware in comparison with a case of adopting a data format with no linking area.

A technology for a disc format including linking areas is disclosed in documents such as USP Nos. 5,528,569 and 5,552,896.

By the way, when thinking of recording/reproduction operations carried out on a multi-layer recording/reproduction disc such as a two-layer recording/reproduction disc having a recording layer designed into a two-layer structure, it is appropriate to consider a recording layer far away from the incidence side of a laser beam for performing the recording/reproduction operations. To put it concretely, the transmissivity of the laser beam through the far recording layer must be taken into consideration.

Assume for example that, in the recording layer on a side close to a recording/reproduction optical system for generating the laser beam, an area already containing recorded data and a free area containing no recorded data exist in an alternating manner. In this case, data may probably not be recorded onto or reproduced from a recording layer on a side far away from the recording/reproduction optical system with a high degree of precision due to effects of differences in optical transmissivity between areas each already containing recorded data and free areas each containing no recorded data.

In order to solve this problem, in a rewritable-disc system, recorded areas and free areas are prevented from being generated in an alternating manner.

As described above, data is recorded in units each consisting a predetermined number of bytes. The unit consisting a predetermined number of bytes is used as an error correction block unit and also referred to hereafter as a cluster. In addition, a linking area is provided between any specific cluster and a cluster immediately following the specific cluster.

In an operation to write data onto an optical disc in such cluster units, when a next cluster physically following a cluster already recorded on the disc is written onto the disc, the front linking area of the next cluster overlaps the rear linking area of the cluster already recorded on the disc. Thus, no partially unrecorded area is generated between the cluster already recorded on the disc and the next cluster. That is to say, since recorded areas and free areas are prevented from being generated in an alternating manner, the problem described above is solved.

Then, a new write-once disc is thought of as a disc to which the same format as the rewritable disc can be applied.

Naturally, data can be written only once onto a write-once disc. So, it is basically meaningless to consider processing to write data onto a write-once disc several times. That is to say, specifications of the physical format of the disc and specifications of the recording/reproduction method are defined only for one-time recording and it is meaningless as well as difficult to define specifications for multi-time recording.

For a situation in which a multi-layer disc described above is also assumed, however, if the method for recording a cluster to overlap a linking area an already recorded cluster is adopted, in the area overlapped by the cluster, a write operation is carried out a plurality of times in spite of a write-once disc so that, for the multi-time recording, media specifications must be defined by taking a variety of characteristics into consideration. The media specifications cited here typically include jitter characteristics, degree of modulation and push-pull amplitude of a reproduced signal.

However, it is difficult to define media specifications capable of keeping up with multi-time recording to be carried on a write-once disc, and such a definition will raise the degree of difficulty in the design and manufacturing of the media and the recording/reproduction apparatus for the media.

If the overlap recording mentioned above is carried out with the media specifications for the multi-time recording remaining undefined as they are, on the other hand, recording/reproduction operations cannot be guaranteed. For example, it is quite within the bounds of possibility that sharp differences in reflectivity are generated in the overlap area, or the recording layer of the disc is damaged. For this reason, there are effects on a tracking servo among others and the effects serve as a system-instability cause such as a state in which it is quite within the bounds of possibility that a stable system cannot be established.

WO-A-02/052558 discloses a recording method in which blocks of data are recorded with linking blocks on a information recording medium.

EP-A-1262971 discloses a method for evaluating error rates on a recording medium.

US-A-5760982 discloses that error rate when reading a recording medium can be used for checking the recording medium.

According to the invention there is provided a recording medium evaluation method for recording data onto a write-once recording medium as specified in claim 1, a recording/reproduction apparatus for a write-once recording medium according to claim 3.

Media specifications concerning recording and reproduction for areas overlapping in a recording operation are not prescribed.

In addition, previous experiences reveal that recording mediums made at the same manufacturing lot at the same time are known to have all but identical characteristics. Thus, if the recording medium selected as a sample is determined to be a good disc, the recording mediums made at the same manufacturing lot at the same time as the sample can each be regarded as a good disc without raising a problem.

That is to say, by evaluating a manufactured write-once optical disc in accordance with the disc evaluation method provided by embodiments of the present invention, the quality of the disc completing a process to record data thereon in block units with the linking areas of the block units overlapping each other can be determined properly and correctly. A write-once optical disc with its quality determined to be low can be rejected at the evaluation stage so that only good discs are shipped and presented to the user. If sharp differences in reflectivity result from a process to record data thereon in block units with the linking areas of the block units overlapping each other, or the damaged recording layer has a bad effect on, among others, the tracking servo, making it impossible to establish a stable servo, for example, the recording medium is determined to be a recording medium with an insufficient quality and, thus, a medium to be rejected. As a result, only good discs are shipped and presented to the user.

The recording/reproduction apparatus provided by embodiments of the present invention is capable of executing such a recording-medium evaluation method.

In addition, a recording medium shipped after passing such an inspection process as a medium provided by embodiments of the present invention allows adjacent block units to be recorded thereon with their linking areas overlapping each other. Thus, the same recording method as a rewritable recording medium can be adopted. As a result, from the system-operation point of view, the recording medium provided by embodiments of the present invention is a desirable medium. The recording medium provided by embodiments of the present invention is also desirable in that its recorded areas and unrecorded areas are not mixed so that the medium is a good medium having a plurality of recording layers.

In addition, the fact that the good state of overlap-recording portions of the optical disc is guaranteed by carrying out an inspection process means or can be stated in other words that media specifications of the overlap-recording portions do not have to be prescribed. That is to say, since media specifications concerning multi-time recording of a write-once optical disc do not have to be defined, it is possible to avoid difficulties of defining media specifications of the write-once recording medium without increasing the degree of difficulty or simplicity of the design and manufacturing of the recording media and the recording/reproduction apparatus.

Further particular and preferred aspects of the present invention are set out in the accompanying independent and dependent claims. Features of the dependent claims may be combined with features of the independent claims as appropriate, and in combinations other than those explicitly set out in the claims.

The present invention will be described further, by way of example only, with reference to preferred embodiments thereof as illustrated in the accompanying drawings, in which:
Figs. 1A and 1B are explanatory diagrams showing the structure of a recording track created on an optical disc implemented by an embodiment of the present invention;
Fig. 2 is an explanatory diagram showing the area configuration of the optical disc implemented by the embodiment;
Fig. 3 is an explanatory diagram showing the internal structures of zones on the optical disc implemented by the embodiment;
Figs. 4A through 4D are explanatory diagrams showing the ECC structure of data recorded on the optical disc implemented by the embodiment;
Fig. 5 is an explanatory diagram showing the frame structure of main data recorded on the optical disc implemented by the embodiment;
Figs. 6A and 6B are explanatory diagrams referred to in describing a method of recording RUB units onto the optical disc implemented by the embodiment;
Figs. 7A through 7C are explanatory diagrams referred to in describing a method of overlap recording applied to the optical disc implemented by the embodiment;
Figs. 8A and 8B are explanatory diagrams referred to in describing a method of overlap recording applied to the optical disc implemented by the embodiment;
Fig. 9 is a block diagram showing the configuration of a disc drive apparatus provided by the embodiment; and
Fig. 10 shows a flowchart representing a disc evaluation method provided by the embodiment.

The following description explains a write-once optical disc implemented by an embodiment of the present invention, a method of evaluating the optical disc and a disc drive apparatus (or a recording/reproduction apparatus) for recording data onto the optical disc and reproducing data from the disc as well evaluating the disc. The optical disc of the write-once type is described in paragraphs arranged in the following order.
1: Disc Structure
2: ECC Format of Data
3: Method of Recording RUBs
4: Disc Drive Apparatus
5: Disc Evaluation Processing
1: Disc Structure

First of all, an optical disc implemented by an embodiment of the present invention is explained.

In general, in an operation to record data onto an optical disc onto which data can be written by adoption of a magneto optical recording method, a phase change recording method and a pigment film change recording method, guiding means for carrying out tracking operations on data tracks on the disc is required. Thus, grooves are created on the optical disc in advance as pregrooves. The created grooves or lands are used as data tracks. A land is a member having a cross section resembling a highland sandwiched by any two adjacent grooves.

In addition, it is also necessary to record information on the optical disc as addresses each indicating a predetermined location on a data track as a location at which data can be recorded. In some cases, these addresses are recorded on the optical disc by wobbling each of the grooves.

That is to say, each track used for recording data is created on the surface of the optical disc in advance as a pregroove and the side walls of the pregroove are wobbled in accordance with addresses embedded in the pregroove.

By wobbling the side walls of each pregroove in this way, an address can be fetched in a recording or reproduction operation from wobbling information obtained as information conveyed by a reflected optical beam. Thus, data can be recorded at a desired location indicated by an address or reproduced from such a location on a track without creating typically pits on the track in advance as data representing the address.

By having addresses embedded in a wobbling groove in this way, it is no longer necessary to provide discrete address areas on the optical disc and record addresses in the areas typically as pit data. Thus, the size of a recording area used for recording actual data can be increased by a difference equivalent to the total size of the eliminated address areas.

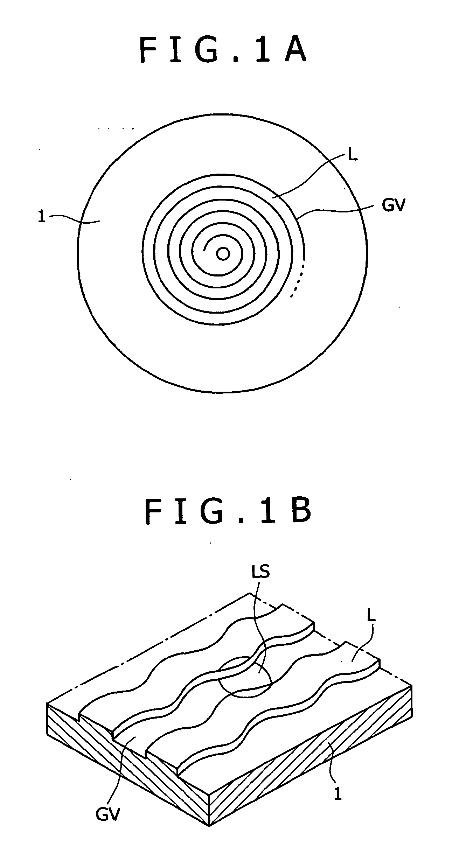

An optical disc 1 implemented by an embodiment of the present invention is a disc of the write-once type. As shown in Fig. 1A, a groove GV is created to serve as a recording track. The groove GV has a spiral form extended from an inner-circumference side to an outer-circumference side. Thus, as shown in Fig. 1B, a cross section cut in the radial direction of the optical disc 1 comprises lands L each having a protruding shape and groves GV each having a dented shape. The lands L and the grooves GV are laid out in an alternating manner as shown in the same figure.

Each groove GV created on the optical disc 1 is wobbled with respect to the tangential direction of the groove GV. The wobbling shape of the groove GV is formed in accordance with a wobble signal modulated by information such as addresses. Thus, by moving a laser spot LS along a groove GV serving as a recording track and detecting positions of both edges of the groove GV from a laser beam reflected by a radiated laser spot LS on the groove GV, an optical-disc drive is capable of extracting components fluctuating in the radial direction of the optical disc from the detected positions of the edges to reproduce the wobble signal. The optical-disc drive then demodulates the reproduced wobble signal in order to generate information such as addresses.

The absolute-time (or the address) information expressed by the wobbling shape of the groove is referred to as an ATIP (Absolute Time In Pregroove) or an ADIP (Address In Pregroove).

It is to be noted that, while this described embodiment of the present invention implements an optical disc having grooves created thereon each to serve as a recording track, other embodiments are not limited to such an optical disc. For example, alternative embodiments comprise an optical disc having lands created thereon each to serve as a recording track. Further alternative embodiments comprise an optical disc having both grooves and lands created thereon each to serve as a recording track.

The optical disc 1 implemented by this embodiment is a write-once disc allowing data to be recorded thereon by adoption of the pigment film change recording method. As dimensions of the optical disc 1, the optical disc 1 has a diameter of 120 mm and a disc thickness of 1.2 mm. This thickness includes a cover layer with a thickness of about 0.1 mm. Thus, from the dimension point of view, the external appearance of the optical disc 1 is similar to a disc adopting a CD (Compact Disc) method or a DVD (Digital Versatile Disc) method.

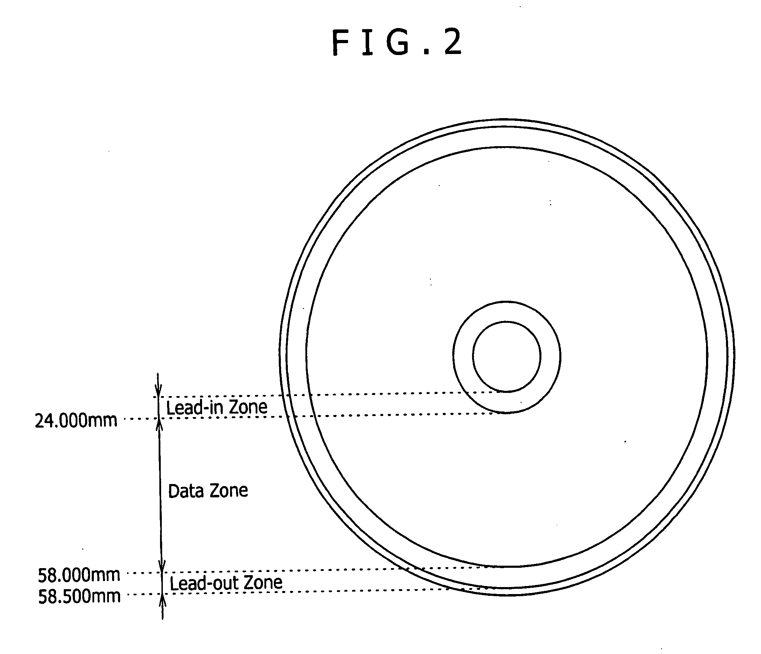

Fig. 2 is an explanatory diagram showing the area configuration of the optical disc 1. As shown in the figure, the area of the optical disc 1 comprises a lead-in zone on the inner circumference side, a lead-out zone on the outer circumference side as well as a data zone between the lead-in and lead-out zones.

The lead-in zone is placed on the inner side of a circumference having a radius of 24 mm. The data zone is placed between the circumference having the radius of 24 mm and a circumference having a radius of 58 mm. The lead-out zone is placed between the circumference having the radius of 58 mm and a circumference having a radius of 58.5 mm.

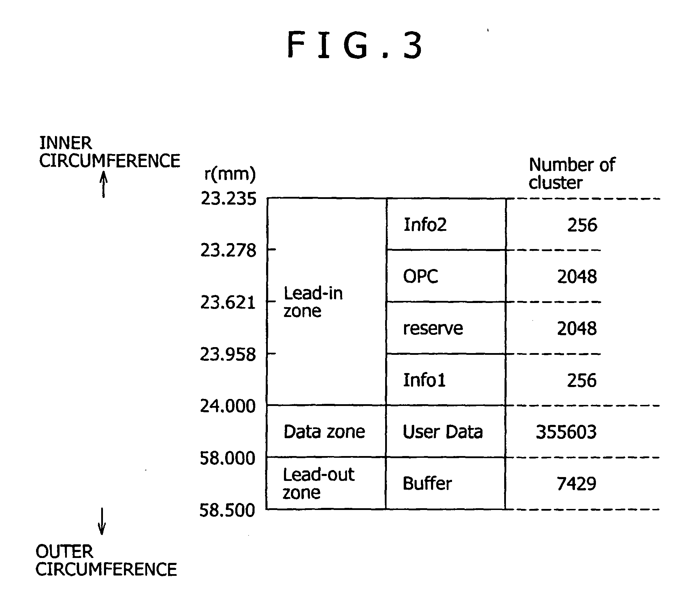

As shown in Fig. 3, the lead-in zone comprises information areas Info1 and Info2 as well as a test write area OPC. The information areas Info1 and Info2 and the test write area OPC are provided between a circumference having a radius of 23.235 mm and the circumference having the radius of 24 mm.

The test write area OPC provided between a circumference having a radius of 23.278 mm and a circumference having the radius of 23.621 mm is an area used for setting recording/reproduction conditions of recording marks. The recording/reproduction conditions include a laser power required for recording/reproduction operations. That is to say, the test write area OPC is an area for adjusting the recording/reproduction conditions.

The information area Infol provided between a circumference having the radius of 23.958 mm and the circumference having the radius of 24 mm as well as the information area Info2 provided between the circumference having the radius of 23.235 mm and the circumference having the radius of 23.278 mm each include a defect management area DMA and a control area. The defect management area DMA is an area used for storing information on defects on the optical disc. The information on defects on the optical disc can be reproduced from the defect management area DMA. The control area is an area used for storing various kinds of control information.

It is to be noted that an area between the circumference having the radius of 23.621 mm and the circumference having the radius of 23.958 mm is an area reserved for use in the future.

The data zone between the circumference having the radius of 24.0 mm and the circumference having the radius of 58.0 mm is an area used for actually recording user data and an area from which user data is reproduced.

The lead-out zone between the circumference having the radius of 58.0 mm and a circumference having a radius of 58.5 mm includes a defect management area similar to the management area of the lead-in zone. In addition, the lead-out zone is also used as a buffer area serving as an overrun area in a seek operation.

The recording/reproduction density is determined by a track pitch of 0.32 µm and a line density of 0.12 of 0.12 µm/bit.

User data is recorded onto and reproduced from the optical disc in cluster units each having a size of 64 KB.

With a cluster set at that size, the information area Info2, the test write area OPC and the information area Infol, which are included in the lead-in zone, can be used for recording information up to 256, 2048 and 256 clusters respectively. The data zone, which is used for recording user data and recorded user data is reproduced from, has a size equivalent to 355603 clusters. Thus, the recording capacity of the data zone for recording user data is 355603 clusters × 64 KB/cluster = about 23.3 GB.

The size of the lead-out zone is 7429 clusters.

It is to be noted that, in some cases, an area on the inner side of the circumference having the radius of 23.235 mm in the lead-in zone shown in Fig. 3 comprises a first management-information area, a second management-information area and an other-information area. The first management-information area is an area used for storing management information at a stage prior to finalization. The second management-information area is an area used for storing management information such as physical information on the optical disc, recording/reproduction conditions and copy control information as read-only data typically in the form of emboss pits or a wobbling group. The other-information area is an area known as a BCA (Burst Cutting Area) for storing other information such as a unique ID peculiar to the disc recording medium in the form of a barcode by application of a burn-cut recording method to the recording layer.

### 2: ECC Format of Data

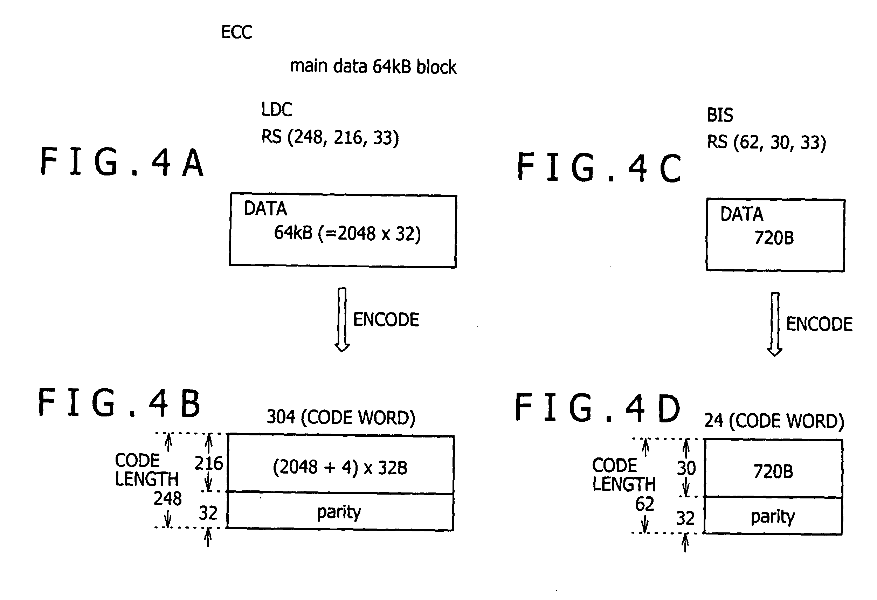

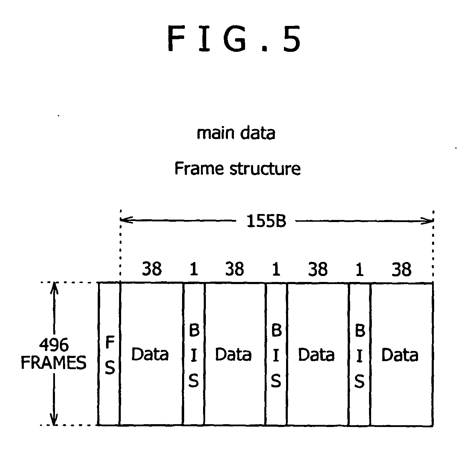

An ECC format of main data (that is, user data and management data) to be recorded onto an optical disc is explained by referring to Figs. 4A through 4D and 5.

As ECCs (error correction codes), there are 2 codes, i. e., an LDC (long distance code) for 64 KB (= 32 sectors × 2048 bytes/sector) and a BIS (Burst Indicator Sub-code).

64 KB main data shown in Fig. 4A is subjected to an ECC encode process to generate an LDC shown in Fig. 4B. To put it in detail, an EDC (error detection code) with a length of 4 B is added to each 2048 B sector of the main data. Then, the LDC for 32 sectors is obtained through encoding. The LDC is an RS (Reed Solomon) code with an RS of (248,216,33) meaning a code length of 248, data of 216 and a distance of 33. A code word of 304 exists.

On the other hand, a BIS is obtained by carrying out an ECC encode process on 720 B data shown in Fig. 4C as shown in Fig. 4D. The BIS is an RS (Reed Solomon) code with an RS of (62,30,33), a code length of 62, data of 30 and a distance of 33. A code word of 24 exists.

Fig. 5 is an explanatory diagram showing the frame structure of main data.

As shown in the figure, the frame structure comprises BISes and pieces of data of the LDC, which are described above. To put it concretely, a frame is a 155 B (bytes) data structure comprising data of 38 B, a BIS of 1 B, data of 38 B, a BIS of 1 B, data of 38 B, a BIS of 1 B and data of 38 B. That is to say, one frame comprises data of 152 B (= 4 pieces of data × 38 B/piece) and an inserted BIS of 1 B between two consecutive ones of the pieces of data.

A frame sync FS serving as a frame synchronization signal is placed at the beginning of the 155 B frame. A block includes 496 frames.

As for the LDC data, code words with even numbers of 0, 2 and so on are placed in frames with even numbers of 0, 2 and so on respectively whereas code words with odd numbers of 1, 3 and so on are placed in frames with odd numbers of 1, 3 and so on respectively.

The BIS has a code having a very excellent error correction power in comparison with the LDC. Normally, the BIS corrects almost all errors. That is to say, a distance of 33 is used for a code length of 62.

For this reason, a symbol of a BIS detecting errors is used as follows.

In an ECC decoding process, a BIS is decoded first. If 2 errors exist in adjacent BISes or in the frame sync FS and the first BIS in the frame structure shown in Fig. 5, the 38 B data sandwiched by the adjacent BISes or the frame sync FS and the first BIS is regarded as a burst error. In this case, an error pointer is added to this 38 B data. In the LDC, this error pointer is used for carrying out pointer erasure correction.

In this way, by correction of the LDC only, the error correction power is enhanced.

A BIS includes information such as an address. This address is used for example in the case of a ROM-type disc or the like in which address information embedded in a wobbling groove is not available.

### 3: Method of Recording RUBs

Data is recorded onto the optical disc 1 implemented by this embodiment in RUB (Recording Unit Block) units. The RUB is a unit including 1 cluster of data. Basically, a RUB comprises a physical cluster, a run-in preceding the physical cluster and a run-out succeeding the physical cluster. As methods of recording data onto the optical disc 1 in RUB units, there are a method of recording one RUB at one time and a method of recording a plurality of RUBs continuously, that is, a method of recording a plurality of RUBs without interrupting the recording operation.

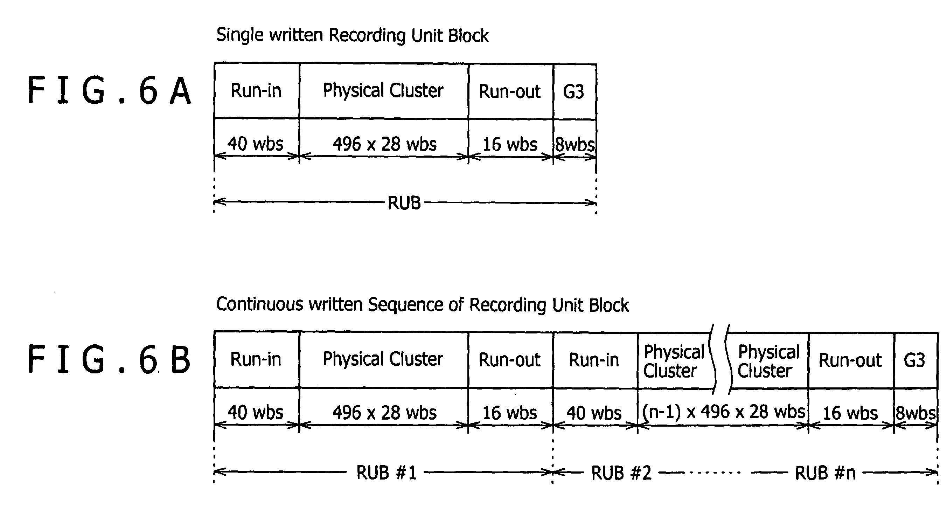

Fig. 6A is a diagram showing the structure of a RUB formed in an operation adopting the aforementioned method of recording one RUB at one time. Such a RUB is referred to as a single written recording unit block. It is to be noted that, in the following description, the single written recording unit block is abbreviated to a single written RUB.

Data being recorded is written onto a wobbling groove of a monotone base. A wobbling period corresponds to 69 channel bits (69T).

The run-in of a RUB occupies a period of 40 wobbles (wbs). The physical cluster following the run-in occupies a period of 13888 wbs (496 x 28 wbs). The run-out following the physical cluster occupies a period of 16 wbs. The run-in, the physical cluster and the run-out thus occupy a total period of 13944 wbs. A guard G3 of 8 wbs is added to this total period to form a RUB.

The run-in serves as a linking area to be overlapped in a recording process. The run-in is also used in APC (automatic power control) of a laser beam, a VFO for bringing over a PLL state, gain control and offset control to mention a few.

The physical cluster is main data comprising user data, an error correction code and a frame synchronization signal.

The run-out is used typically for, at a rear end of PLL, preventing degradation of a data area.

The guard G3 is used as an area of a transition of a laser power from a recording power and a linking area to be overlapped in a recording process.

Fig. 6B is a diagram showing a sequence of RUBs recorded by adopting the aforementioned method of recording a plurality of RUBs continuously. It is to be noted that such a sequence of RUBs is referred to as a continuous written sequence of recording unit blocks. It is also worth noting that, in the following description, the continuous written sequence of recording unit blocks is abbreviated to continuous written RUBs.

In this case, when RUB #1 to RUB #n are recorded continuously, each of the continuous written RUBs except RUB #n has the same structure as a single written RUB excluding the guard G3. That is to say, each of the continuous written RUBs except RUB #n comprises a run-in of 40 wbs, a physical cluster of 13888 wbs and a run-out of 16 wbs to form a total period of 13944 wbs.

RUB #n, which is the last RUB, is the same as a single written RUB. That is to say, RUB #n comprises a run-in of 40 wbs, a physical cluster of 13888 wbs, a run-out of 16 wbs and a guard G3 of 8 wbs.

Data can be written onto the optical disc 1 as a single written RUB or continuous written RUBs in dependence on the condition of the data or in accordance with a command issued by a host apparatus.

In the case of this embodiment, without regard to whether data is written onto the optical disc 1 as a single written RUB or continuous written RUBs, if the single written RUB or the first one of the continuous written RUBs is written at a location physically adjacent to an already recorded RUB, the linking area of the RUB being written overlaps the linking area of the already recorded RUB. To put it concretely, the single written RUB or the first one of the continuous written RUBs is written at the adjacent location with its run-in overlapping a guard G3 located at the rear end of the already recorded area as the guard G3 of the already recorded RUB at the rear end of the already recorded area.

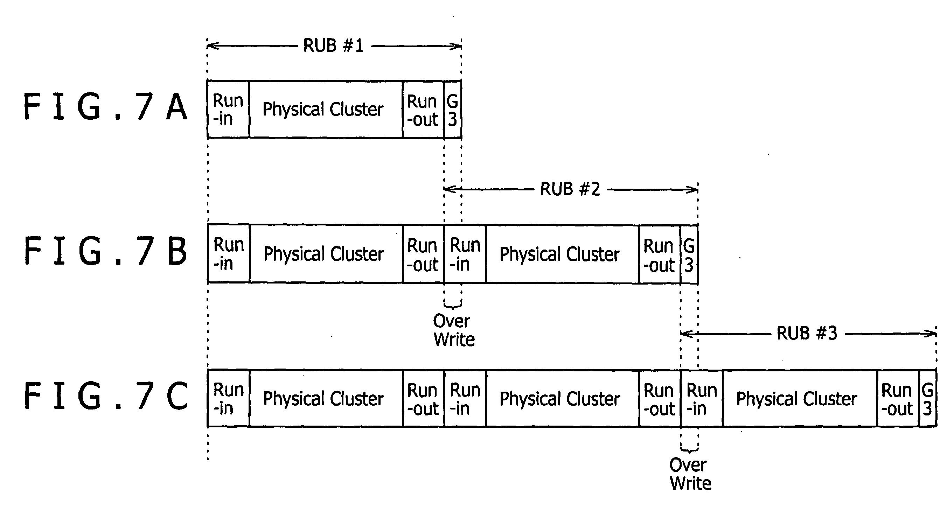

Figs. 7A through 7C are diagrams showing a case in which every RUB is recorded onto the optical disc 1 as a single written RUB.

Initially, RUB #1 is recorded onto the optical disc 1 as a single written RUB as shown in Fig. 7A. Then, RUB #2 is recorded onto the optical disc 1 as a single written RUB as shown in Fig. 7B. In this case, the run-in of RUB #2 overlaps the area occupied by the guard G3 of RUB #1 as shown in the figure.

Subsequently, RUB #3 is recorded onto the optical disc 1 as a single written RUB as shown in Fig. 7C. In this case, the run-in of RUB #3 overlaps the area occupied by the guard G3 of RUB #2 as shown in the figure.

When a sequence of RUBs is written as continuous written RUBs at an area following already recorded continuous written RUBs, the run-in of the first RUB of the continuous written RUBs being written overlaps the guard G3 of the last RUB of the already recorded continuous written RUBs. It is to be noted that this operation is shown in none of the figures.

That is to say, as shown in Fig. 6B, the linking area at the rear end of continuous written RUBs is the guard G3, which is overlapped by the run-in at the front end of the continuous written RUBs being written.

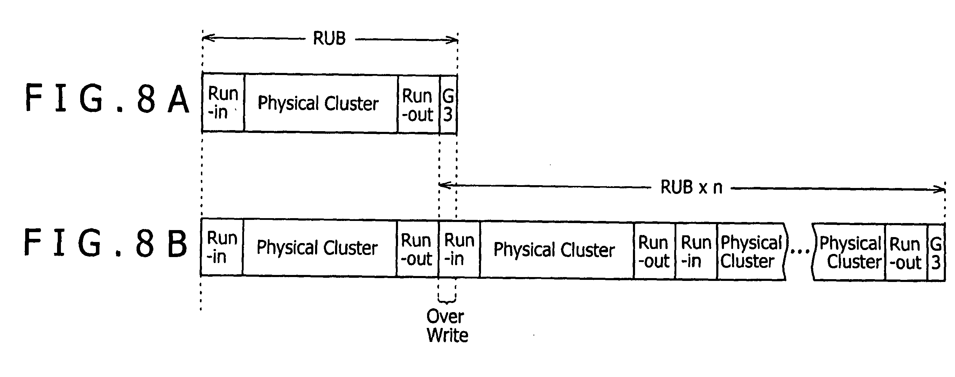

In addition, also in an operation to record a RUB or RUBs by mixing a single written RUB with continuous written RUBs, the run-in of a newly written RUB overlaps the guard G3 of the last RUB already recorded on the optical disc 1. Assume for example a single written RUB shown in Fig. 8A as a RUB already recorded on the optical disc 1 and continuous written RUBs to be written in an area following the single written RUB. In this case, the run-in of the first RUB of the continuous written RUBs being written overlaps the guard G3 of the single written RUB as shown in Fig. 8B.

Conversely, a RUB can be written as a single written RUB in an area following already recorded continuous written RUBs in the same way.

As described above, by recording a new RUB at a location following an already recorded RUB with the run-in of the new RUB overlapping the guard G3 included in the already recorded RUB as a linking area, a recording operation can be carried out without resulting in recorded areas mixed with unrecorded areas.

That is to say, for a write-once disc implemented by this embodiment, it is possible to carry out the same recording operation as that for a rewritable disc adopting the phase change recording method taking a multi-layer disc such as a 2-layer disc into consideration.

### 4: Disc Drive Apparatus

By the way, the overlap-recording operation described above is carried out in spite of the fact that the optical disc 1 implemented by the embodiment is a write-once disc. By carrying out the overlap-recording operation, it is most likely impossible to assure the recording and reproduction characteristics of the area subjected to the overlap-recording operation. That is to say, it is quite within the bound of possibilities that sharp differences in reflectivity are generated in the overlap area, or the recording layer of the disc is damaged. It is thus feared that the sharp differences in reflectivity or the damaged recording layer serve as a cause of system instability. An example of the system-instability cause is the inability to guarantee servo stability.

In order to solve the problems, a disc drive apparatus to be explained below carries out disc evaluation processing to be described in the following paragraph to reject a bad disc in an inspection process performed after the process to manufacture the disc.

It is to be noted that the disc drive apparatus to be explained below is assumed to be an apparatus not only capable of carrying out ordinary recording and reproduction operations, but also capable of carrying out the disc evaluation processing to be described in the following paragraph. Thus, the disc drive apparatus is explained not only as an ordinary disc drive apparatus, but also as a special disc drive apparatus installed at a factory making discs as an apparatus capable of carrying out the processing to evaluate the discs.

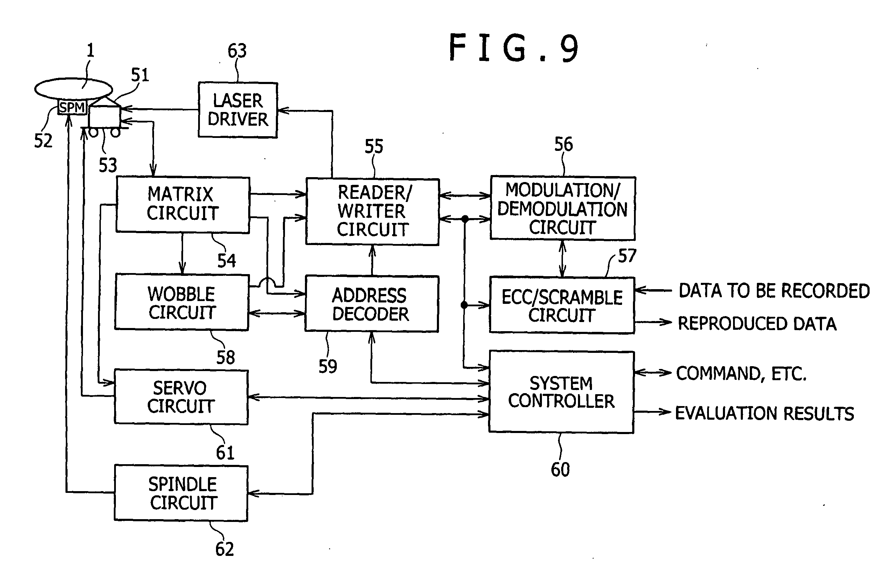

Fig. 9 is a diagram showing the configuration of the disc drive apparatus.

The optical disc 1 is mounted on a turntable not shown in the figure. In recording and reproduction operations, a spindle motor 52 drives the optical disc 1 into rotation at a CLV (constant line velocity).

Then, an optical pickup (or an optical head) 51 reads out data recorded on the optical disc 1. In addition, the optical pickup 51 also reads out disc information and ADIP information embedded in a groove track as the wobbling shape of the track.

In a recording operation, on the other hand, the optical pickup 51 writes data onto a groove track as a pit mark. In the case of an optical disc 1 implemented as a write-once disc, the pit mark is a pigment change mark but, in the case of an optical disc 1 implemented as a rewritable disc, the pit mark is a phase change mark

The optical pickup 51 comprises a laser diode, a photo detector, an object lens and an optical system, which are not shown in the figure. The laser diode is a component serving as a laser-beam source for generating a laser beam. The photo detector is a component for detecting a laser beam reflected by the recording face of the optical disc 1. The object lens is a component used as the output terminal of the generated laser beam. The optical system is a component for radiating the generated laser beam to the recording face of the optical disc 1 by way of the object lens and guiding the reflected laser beam to the photo detector.

In the optical pickup 51, a 2-shaft mechanism holds the object lens in a state of being movable in a tracking direction and a focus direction. The entire optical pickup 51 can be moved by a sled mechanism 53 in the radial direction of the optical disc 1. A drive current generated by a laser driver 63 as a drive signal drives the laser diode employed in the optical pickup 51 to generate a laser beam.

The photo detector detects information conveyed by the laser beam reflected from the recording face of the optical disc 1, converts the information into an electrical signal having a magnitude determined by the light quantity of the reflected laser beam and supplies the electrical signal to a matrix circuit 54.

The matrix circuit 54 comprises a current/voltage conversion circuit and a matrix-processing/amplification circuit. The current/voltage conversion circuit converts the electrical current output by a plurality of light-receiving devices forming the photo detector into a voltage, and supplies the voltage to the matrix-processing/amplification circuit, which carries out matrix processing on the voltage to generate necessary signals.

The signals generated by the matrix circuit 54 include a high-frequency signal (or a reproduced-data signal) representing reproduced data as well as a focus-error signal and a tracking-error signal, which are used in servo control.

In addition, the matrix circuit 54 also generates a push-pull signal as a signal representing the wobbling state of a groove, that is, a signal representing a result of detection of the wobbling state.

It is to be noted that the matrix circuit 54 is embedded in the optical pickup 51 in some cases.

The reproduced-data signal generated by the matrix circuit 54 is supplied to a reader/writer circuit 55. The focus-error and tracking-error signals generated by the matrix circuit 54 are supplied to a servo circuit 61. The push-pull signal generated by the matrix circuit 54 is supplied to a wobble circuit 58.

The reader/writer circuit 55 is a component for carrying out processing to reproduce data read out from pit marks on the optical disc 1 and supply the data to a modulation/demodulation circuit 56. The processing includes a binary conversion process performed on the reproduced-data signal. In addition, the reader/writer circuit 55 also carries out a reproduction-clock generation process using a PLL to generate a reproduction clock signal.

The modulation/demodulation circuit 56 has a functional member serving as a decoder for decoding the data reproduced from the optical disc 1 and a functional member serving as an encoder for encoding data to be recorded onto the optical disc 1. As a decoding process for a reproduction operation, the modulation/demodulation circuit 56 carries out modulation processing of run length limited codes on the basis of the reproduction clock signal.

An ECC/scramble circuit 57 is a component for carrying out an ECC encoding process for adding error correction codes and a scramble process in a recording operation. In a reproduction operation, on the other hand, the ECC/scramble circuit 57 carries out a descramble process as the inverse processing of the scramble process and an ECC decoding process for error correction.

In a reproduction operation, data obtained as a result of a demodulation process carried out by the modulation/demodulation circuit 56 is stored in a memory. Then, the ECC/scramble circuit 57 carries out the descramble process and an error detection/correction process on the stored data to generate reproduced data.

The ECC encoding process and ECC decoding process carried out by the ECC/scramble circuit 57 are each processing for the LDC format using the RS (Reed-Solomon) code referred to as the aforementioned RS (248, 216, 33) having a code length of 248, data of 216 and a distance of 33.

Data decoded by the ECC/scramble circuit 57 into reproduced data is read out and output to a host apparatus not shown in the figure as the reproduced data in accordance with a command issued by a system controller 60. Examples of the host apparatus are an apparatus and a personal computer, which operate as an AV (Audio-Visual) system.

The push-pull signal output by the matrix circuit 54 as a signal related to a wobbling groove of the optical disc 1 is processed in the wobble circuit 58. The push-pull signal conveying ADIP information is subjected to MSK-modulation and HMW-modulation processes in the wobble circuit 58 to generate a data stream composing an ADIP address. The wobble circuit 58 then supplies the data stream to an address decoder 59.

The address decoder 59 decodes the data stream supplied thereto in order to obtain the value of the address and outputs the address value to the system controller 60. In addition, the address decoder 59 also carries out a PLL process using a wobble signal received from the wobble circuit 58 to generate a clock signal and supplies the clock signal to other components for example in a recording operation as an encoding clock signal.

In an operation to record data onto the optical disc 1, data to be recorded onto the optical disc 1 is transferred from a host apparatus. The data to be recorded is stored in a memory employed in the ECC/scramble circuit 57 as a buffer. The ECC/scramble circuit 57 processes the data stored in the buffer as data to be recorded onto the optical disc 1 by carrying out ECC encode processing including a process to add error correction codes to the data, a scramble process and a process to add sub-codes or the like to the data. The data completing the ECC encode processing including the scramble process is supplied to the modulation/demodulation circuit 56 to be subjected to a modulation process adopting an RLL (1-7) PP method. The modulation/demodulation circuit 56 then supplies a result of the modulation process to the reader/writer circuit 55.

In the recording operation, a clock signal generated from the wobble signal as described above is used as an encoding clock signal, which serves as a reference clock signal for the encode processing described above.

Data produced by the encode processing as data to be recorded onto the optical disc 1 is supplied to the reader/writer circuit 55 to be subjected to recording compensation processing including a fine adjustment process to determine a recording power optimum for recording attributes and a process to adjust the waveform of laser drive pulses. The recording attributes include characteristics of the recording layer, the shape of the laser-beam spot and the recording line velocity. A result of the recording compensation processing is supplied to a laser driver 63 as laser drive pulses.

The laser driver 63 supplies the laser drive pulses to the laser diode employed in the optical pickup 51 as a signal for driving the diode to generate a laser beam. The generated laser beam creates pit marks on the optical disc 1 as marks representing the data being recorded on the optical disc 1.

It is to be noted that the laser driver 63 includes an APC (Automatic Power Control) circuit for controlling the power of the output laser beam to a constant value independent of surrounding conditions such as the ambient temperature while monitoring the power of the output laser beam on the basis of an output of the photo detector employed in the optical pickup 51 as means for monitoring the power of the laser beam. The system controller 60 provides target values of the laser outputs for recording and reproduction operations, and the levels of the laser outputs for recording and reproduction operations are controlled to their respective target values.

A servo circuit 61 is a component for generating a variety of servo drive signals including focus, tracking and sled drive signals from the focus-error and tracking-error signals received from the matrix circuit 54 to carry out servo operations.

That is to say, the servo circuit 61 generates the focus drive signal and the tracking drive signal in accordance with the focus-error signal and the tracking-error signal respectively, outputting the focus drive signal and the tracking drive signal to the optical pickup 51 as signals for driving respectively a focus coil and a tracking coil, which are employed in the two-shaft mechanism in the optical pickup 51. Thus, the optical pickup 51, the matrix circuit 54, the servo circuit 61 and the two-shaft mechanism form a tracking servo loop and a focus servo loop.

In accordance with a track-jump command issued by the system controller 60, the servo circuit 61 turns off the tracking servo loop and outputs a jump drive signal to drive the optical pickup 51 to carry out a jump operation.

In addition, on the basis of information such as a sled error signal obtained as a low-frequency component of the tracking error signal and access execution control from the system controller 60, the servo circuit 61 generates a sled drive signal for driving a sled mechanism 53. The sled mechanism 53 has a mechanism comprising a main shaft for holding the optical pickup 51, a sled motor and a propagation gear. The sled drive signal drives the sled motor to slide the optical pickup 51 over a required distance. It is to be noted that the mechanism of the sled mechanism 53 is not shown in the figure.

A spindle servo circuit 62 executes control to rotate the spindle motor 52 at a CLV. The spindle servo circuit 62 obtains a clock signal generated in PLL processing for the wobble signal as information on the present rotational speed of the spindle motor 52 and compares the present rotational speed with a predetermined CLV reference speed to generate a spindle error signal.

In an operation to reproduce data from the optical disc 1, a reproduction clock signal generated by a PLL in the reader/writer circuit 55 represents the present rotational speed of the spindle motor 52. The reproduction clock signal is a clock signal used as a reference in decode processing. The reproduction clock signal can also be compared with a predetermined CLV reference speed to generate a spindle error signal. Then, the spindle servo circuit 62 outputs a spindle drive signal according to the spindle error signal to the spindle motor 52 to drive the spindle motor 52 into rotation at the CLV.

In addition, in accordance with a spindle kick/brake control signal produced by the system controller 60, the spindle servo circuit 62 generates a spindle drive signal for carrying out operations on the spindle motor 52. The operations include operations to start, stop, accelerate and decelerate the spindle motor 52.

The system controller 60 based on a microcomputer controls a variety of aforementioned operations of the servo systems and the recording/reproduction system, which are described above. In accordance with commands received from a host apparatus such as an external AV system, the system controller 60 carries out various kinds of processing. For example, in accordance with a write command received from the host apparatus, first of all, the system controller 60 moves the optical pickup 51 to an address at which data is to be written onto the optical disc 1. Then, the ECC/scramble circuit 57 and the modulation/demodulation circuit 56 carry out encode processing described above on the data received from the external AV system. Examples of the data are video and audio data generated by adopting a variety of methods such as the MPEG2 method. Subsequently, the reader/writer circuit 55 outputs laser drive pulses representing the data to be recorded onto the optical disc 1 to the laser driver 63 to write the data at the address.

For example, if a read command requesting a transfer of data recorded on the optical disc 1 to a host apparatus is received from the host apparatus such as an external AV system, first of all, the system controller 60 controls a seek operation to a target indicated by an address specified in the read command. That is to say, the system controller 60 issues a seek command to the servo circuit 61 to drive the optical pickup 51 to carry out an operation making an access to the target indicated by the address specified in the read command. An example of the data recorded on the optical disc 1 is MPEG2 data.

Then, the system controller 60 controls operations required to transfer data of a data segment indicated by the address to the external AV system. That is to say, data is read out from the optical disc 1 and subjected to processing such as decode and buffering processes carried out in the reader/writer circuit 55, the modulation/demodulation circuit 56 and the ECC/scramble circuit 57 before being transferred to the external AV system.

It is to be noted that, in these data-recording and data-reproducing operations, the system controller 60 controls accesses and the data-recording and data-reproducing operations by using an ADIP address detected by the address decoder 59 or an address included in a BIS.

In such a disc drive apparatus, the data-recording and data-reproducing operations can be carried out on the optical disc 1 and the apparatus is also capable of performing a disc evaluation process.

For example, the disc drive apparatus implemented by the embodiment is installed at a location in a manufacturing line to produce discs as an apparatus for carrying out a disc evaluation process of the discs as part of inspection processing of the line. In this case, the optical discs produced are the write-once discs implemented by the embodiment.

In order to evaluate an optical disc, data is written onto the disc. Then, the data is read out from the disc and an error rate is measured. Subsequently, a result of the evaluation is output as a result revealing whether or not the error rate is equal to or smaller than a predetermined value. In the reproduction operation, the ECC/scramble circuit 57 produces an error rate, which is then compared by the system controller 60 with the predetermined value. The result of the comparison is output to typically a host apparatus as the result of the evaluation revealing an OK or NG state of the disc.

### 5: Disc Evaluation Processing

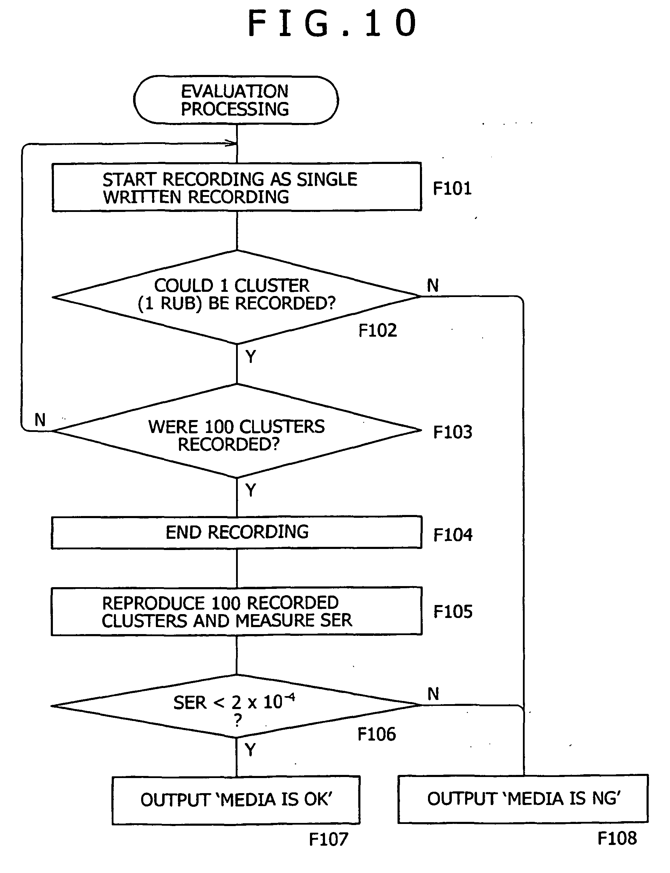

Disc evaluation processing carried out by the disc drive apparatus described above is explained by referring to a flowchart shown in Fig. 10. In a process to manufacture discs, discs made at the same manufacturing lot can be considered to have about the same characteristics. Thus, only a predetermined number of discs is extracted from a large number of discs made at the same manufacturing lot and subjected to the disc evaluation processing described below.

Fig. 10 shows a flowchart representing the disc evaluation processing carried out by the system controller 60.

First of all, an optical disc 1 extracted for quality evaluation is mounted on the disc drive apparatus. Then, for example, when a host apparatus issues a command to the system controller 60 as a command requesting the system controller 60 to carry out the disc evaluation processing, the processing represented by the flowchart shown in Fig. 10 is started.

The flowchart begins with a step F101 at which the system controller 60 carries out an operation to write a cluster (or a RUB) onto the optical disc 1 as a process to record a single written RUB onto a recording track of the optical disc 1. It is to be noted that, in this recording operation, data to be written can be supplied from the host apparatus to the ECC/scramble circuit 57 or the system controller 60 may generate a data pattern for a test purpose and supplies the data pattern to the ECC/scramble circuit 57. By execution of the control of the step F101, the processing of the recording system is carried out to record 1 RUB onto the optical disc 1.

The flow of the disc evaluation processing then goes on to a step F102 to determine whether or not the RUB has been recorded onto the optical disc 1 correctly and properly. If the RUB has been recorded on the optical disc 1 correctly and properly, the flow of the disc evaluation processing then goes on to a step F103 to determine whether or not a process to record 100 clusters (or 100 RUBs) onto the optical disc 1 has been completed. If the process to record the 100 clusters onto the optical disc 1 has not been completed, the flow of the disc evaluation processing goes back to the step F101 at which control is again executed to carry out an operation to write a next cluster (or a next RUB) onto the optical disc 1 as a process to record a single written RUB onto a recording track of the optical disc 1. It is to be noted that, in the recording operations, a next single written RUB is recorded at a physical location contiguously following an already recorded single written RUB. To put it in detail, as explained earlier by referring to Figs. 7A through 7C, the next single written RUB is recorded with the run-in thereof overlapping the guard G3 of the already recorded single written RUB. That is to say, the system controller 60 records the next single written RUB in an area starting at the address of the guard G3 of the already recorded single written RUB.

By carrying out the pieces of processing of the steps F101 to F103, 100 RUBs are recorded in a physically contiguous area of the optical disc 1 with the run-in of a presently recorded RUB overlapping the guard G3 of the single written RUB recorded immediately before.

If the determination result produced at the step F102 reveals that a RUB has not been recorded onto the optical disc 1 correctly and properly before the process to record 100 RUBs onto the optical disc 1 has been completed, the flow of the disc evaluation processing goes on to a step F108. Assume for example that, in an operation to record a single written RUB, the recording operation cannot be carried out normally due to an abnormality of the tracking servo or the like. In this case, the flow of the disc evaluation processing goes on from the step F102 to the step F108 at which an evaluation result indicating that the optical disc 1 is a bad disc is output. Then, the execution of the disc evaluation processing is ended.

If the processing to record each of the single written RUBs onto the optical disc 1 has been continued normally till completion of the processing to record 100 RUBs, on the other hand, the flow of the disc evaluation processing goes on from the step F103 to a step F104 at which the series of recording operations each carried out to record a single written disc onto the optical disc 1 is ended. Then, at the next step F105, the 100 recorded clusters are reproduced from the optical disc 1 and an SER (symbol error rate) is measured. That is to say, the system controller 60 acquires an error rate obtained by the ECC/scramble circuit 57 in the process to reproduce the 100 clusters from the optical disc 1.

Then, the flow of the disc evaluation processing goes on to a step F106 at which the SER is compared with a predetermined value used as a criterion. Typically, the criterion value is set at 2 × 10⁻⁴. If the SER does not exceed the criterion value, the optical disc 1 is evaluated as good recording media. If the optical disc 1 is evaluated as good media as evidenced by the fact that the SER does not exceed 2 × 10⁻⁴, the flow of the disc evaluation processing goes on to a step F107 at which an evaluation result of OK media is output to reveal that the optical disc 1 has been determined to be good recording media before the execution of the disc evaluation processing is ended. If the SER exceeds the criterion value of 2 × 10⁻⁴, on the other hand, the flow of the disc evaluation processing goes on to a step F108 at which an evaluation result of NG media is output to reveal that the optical disc 1 has been determined to be bad recording media before the execution of the disc evaluation processing is ended.

The disc evaluation processing described above is carried out to evaluate the quality of optical discs made at the manufacturing lot and reject bad products. That is to say, if a tracking servo is affected by the recording media in an operation to record a next RUB onto the media with the run-in of the next RUB overlapping the guard of the immediately preceding RUB already recorded on the media, for example, the flow of the disc evaluation processing goes on from the step F102 to the step F108 at which an evaluation result of NG media is output and the media is rejected.

In addition, the recording and reproduction qualities of the recording media can be evaluated by measuring an error rate of a reproduction operation carried out after the operations each performed to record a next RUB onto the media with the run-in of the next RUB overlapping the guard of the immediately preceding RUB already recorded on the media. If the measured error rate of the recording media does not meet a standard, the flow of the disc evaluation processing goes on from the step F106 to the step F108 at which an evaluation result of NG media is output and the media having an insufficient quality can be rejected.

On the top of that, if the recording media has a bad effect on a tracking error in the overlap area, for example, a stable tracking servo cannot be established in the reproduction operation. Thus, also in this case, the measured error rate of the recording media does not meet the standard either and, by the same token, the flow of the disc evaluation processing goes on from the step F106 to the step F108 at which an evaluation result of NG media is output and the media having an insufficient quality can be rejected.

In this way, bad optical discs made at a manufacturing lot can be rejected so that only good discs each indicated by an evaluation result of OK media can be shipped as discs of the manufacturing lot.

In the case of a write-once optical disc implemented by this embodiment, a manufactured disc can be evaluated and it is possible to determine the quality of the write-once disc allowing an operation to record a next RUB onto the disc with the run-in of the next RUB overlapping the guard of the immediately preceding RUB already recorded on the disc. In the following description, an operation to record a next RUB onto an optical disc with the run-in of the next RUB overlapping the guard of the immediately preceding RUB already recorded on the disc is referred to simply as an overlap-recording operation. Thus, a bad optical disc can be rejected and only good optical discs can be presented to the user. That is to say, only good optical discs are shipped as discs, which each do not raise a problem even if the recording method letting the run-in of the next RUB overlap the guard of the immediately preceding RUB already recorded thereon. Examples of the bad optical discs are a disc showing a sharp reflectivity difference caused by such an overlap-recording operation and a disc causing an instable tracking servo due to for example the bad effect of a damaged recording layer resulting from such an overlap-recording operation. Thus, it is possible to assure stable operations of a system using a write-once disc allowing an overlap-recording operation to be carried out. In addition, the fact that the good state of overlap-recording portions of the optical disc is guaranteed by carrying out an inspection process means or can be stated in other words that media specifications of the overlap-recording portions do not have to be prescribed. That is to say, since media specifications concerning multi-time recording of a write-once optical disc do not have to be defined, it is possible to avoid difficulties of defining media specifications of the write-once recording medium without increasing the degree of difficulty or simplicity of the design and manufacturing of the recording media and the recording/reproduction apparatus. The media specifications include jitter values including values of binary data jitters and reproduction-clock jitters, the degree of modulation, the amplitude of a push-pull signal and other quantities. The degree of modulation is defined as the amplitude of a post-recording reproduced signal to the amplitude of a pre-recording signal.

As described above, in this embodiment, the system controller 60 carries out a determination process at the step F106. It is to be noted, however, that the disc drive apparatus may also output an SER (symbol error rate) to typically a host apparatus, which then compares the SER with a predetermined criterion to determine whether the optical disc is a good or bad disc. As an alternative, the numerical value of the SER itself is displayed on a monitor apparatus and an operator checks the displayed value to form a judgment as to whether the optical disc is a good or bad disc.

In addition, the disc evaluation processing like the one represented by the flowchart shown in Fig. 10 can also be carried out by a recording/reproduction apparatus owned by the user.

On the top of that, one embodiment of the invention comprises a system using write-once discs having a variety of types or write-once media of another type.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. A recording-medium evaluation method for recording data onto a write-once disc shaped recording medium (1) allowing said data to be recorded thereon in recording unit blocks, RUBs, each RUB including a cluster of data preceded by a run-in occupying a period of 40 wobbles and serving as a linking area used in automatic power control of a laser and a variable frequency oscillator to settle a phase lock loop and followed by a run-out of 16 wobbles and a guard following the run-out wherein the run-in of a RUB to be newly mitten overlaps with the guard of an already recorded RUB, said recording-medium evaluation method comprising the steps of:
recording said newly mitten RUBs onto said write-once recording medium (1) contiguously with the run-in of the already recorded RUB starting at the start address of the guard of the already recorded RUB which was recorded immediately before;
reproducing said newly mitten RUBs recorded at said recording step;
measuring an error rate of said reproduced newly mitten RUBs; and
determining whether said write-once recording medium is a good or bad recording medium by comparing a result of said measurement step of measuring said error rate against a predetermined criterion.

2. A recording-medium evaluation method according to claim 1, wherein said determining step comprises determining that said write-once recording medium (1) is a good recording medium if said error rate measured at said measurement step is found to be not greater than a predetermined value.

3. A recording/reproduction apparatus provided for a write-once disc shaped recording medium (1) allowing data to be recorded thereon in recording unit blocks, RUBs, each RUB including a cluster of data preceded by a run-in occupying a period of 40 wobbles and serving as a linking area used in automatic power control of a laser and a variable frequency oscillator to settle a phase lock loop and followed by a run-out of 16 wobbles and a guard following the run-out wherein the run-in of a RUB to be newly mitten overlaps with the guard of an already recorded RUB, said recording/reproduction apparatus comprising:
a recording/reproduction unit (55) for recording said newly mitten RUBs onto said write-once recording medium contiguously with the run-in of the already recorded RUB starting at the start address of the guard of the already recorded RUB which was recorded immediately before;
a control unit (60) for controlling said recording/reproduction unit (55) to record said newly mitten RUBs onto said write-once recording medium (1) contiguously with the run-in of the newly mitten RUB starting at the address of the guard of the already recorded RUB which was recorded immediately before and reproduce said recorded RUBs;
a measurement unit for measuring an error rate of said newly mitten RUBs reproduced by said recording/reproduction unit; and
a determination unit for determining whether said write-once recording medium is a good or bad recording medium (1) by comparing a result produced by said measurement unit as a result of measuring said error rate against a predetermined criterion.

4. A recording/reproduction apparatus according to claim 3, wherein said determination unit determines that said write-once recording medium is a good recording medium if said error rate measured by said measurement unit is found to be not greater than a predetermined value.

## Patentansprüche

1. Aufzeichnungsmedienbewertungsverfahren zur Aufzeichnung von Daten auf einem einmal beschreibbaren scheibenförmigen Aufzeichnungsmedium (1), das es ermöglicht, dass die Daten darauf in Aufzeichnungseinheitsblöcken, RUBs, aufgezeichnet werden, wobei jeder RUB ein Cluster von Daten enthält, dem ein Einlaufbereich vorausgeht, der eine Periode von 40 Wobbles einnimmt und als ein Verknüpfungsbereich dient, der bei der automatischen Leistungsregelung eines Lasers und eines Oszillators mit variabler Frequenz verwendet wird, um einen Phasenregelkreis abzustimmen, und dem sich ein Auslaufbereich von 16 Wobbles und ein Schutzbereich anschließt, der dem Auslaufbereich folgt, wobei sich der Einlaufbereich eines schon geschriebenen RUB mit dem Schutzbereich eines schon aufgezeichneten RUB überlappt, wobei das Aufzeichnungsmedienbewertungsverfahren die folgenden Schritte aufweist:
Aufzeichnen der schon geschriebenen RUBs auf das einmal beschreibbare Aufzeichnungsmedium (1) zusammenhängend mit dem Einlaufbereich des schon aufgezeichneten RUB beginnend an der Startadresse des Schutzbereichs des schon aufgezeichneten RUB, der unmittelbar zuvor aufgezeichnet wurde;
Wiedergeben der im Aufzeichnungsschritt aufgezeichneten schon geschriebenen RUBs;
Messen einer Fehlerrate der wiedergegebenen schon geschriebenen RUBs; und
Feststellen, ob das einmal beschreibbare Aufzeichnungsmedium ein gutes oder schlechtes Aufzeichnungsmedium ist, durch Vergleichen eines Resultats des Messschritts des Messens der Fehlerrate mit einem vorgegebenen Kriterium.

2. Aufzeichnungsmedienbewertungsverfahren nach Anspruch 1, wobei der Feststellungsschritt das Feststellen umfasst, dass das einmal beschreibbare Aufzeichnungsmedium (1) ein gutes Aufzeichnungsmedium ist, wenn festgestellt wird, dass die im Messschritt gemessene Fehlerrate nicht größer als ein vorgegebener Wert ist.

3. Aufzeichnungs-/Wiedergabevorrichtung, die für ein einmal beschreibbares scheibenförmiges Aufzeichnungsmedium (1) vorgesehen ist, das es ermöglicht, dass die Daten darauf in Aufzeichnungseinheitsblöcken, RUBs, aufgezeichnet werden, wobei jeder RUB ein Cluster von Daten enthält, dem ein Einlaufbereich vorausgeht, der eine Periode von 40 Wobbles einnimmt und als ein Verknüpfungsbereich dient, der bei der automatischen Leistungsregelung eines Lasers und eines Oszillators mit variabler Frequenz verwendet wird, um einen Phasenregelkreis abzustimmen, und dem sich ein Auslaufbereich von 16 Wobbles und ein Schutzbereich anschließt, der dem Auslaufbereich folgt, wobei sich der Einlaufbereich eines schon geschriebenen RUB mit dem Schutzbereich eines schon aufgezeichneten RUB überlappt, wobei die Aufzeichnungs-/Wiedergabevorrichtung aufweist:
eine Aufzeichnungs-/Wiedergabeeinheit (55) zur Aufzeichnung der schon geschriebenen RUBs auf das einmal beschreibbare Aufzeichnungsmedium zusammenhängend mit dem Einlaufbereich des schon aufgezeichneten RUB beginnend an der Adresse des Schutzbereichs des schon aufgezeichneten RUB, der unmittelbar zuvor aufgezeichnet wurde;
eine Steuereinheit (60) zum Steuern der Aufzeichnungs-/Wiedergabeeinheit (55), die schon geschriebenen RUBs auf dem einmal beschreibbaren Aufzeichnungsmedium (1) zusammenhängend mit dem Einlaufbereich des schon geschriebenen RUB beginnend an der Adresse des Schutzbereichs des schon aufgezeichneten RUB aufzuzeichnen, der unmittelbar zuvor aufgezeichnet wurde, und die aufgezeichneten RUBS wiederzugeben;
eine Messeinheit zum Messen einer Fehlerrate der durch die Aufzeichnungs-/Wiedergabeeinheit wiedergegebenen RUBS; und
eine Feststellungseinheit zum Feststellen, ob das einmal beschreibbare Aufzeichnungsmedium ein gutes oder schlechtes Aufzeichnungsmedium (1) ist, durch Vergleichen eines Resultats, das durch die Messeinheit als Resultat des Messens der Fehlerrate erzeugt wird, mit einem vorgegebenen Kriterium.

4. Aufzeichnungs-/Wiedergabevorrichtung nach Anspruch 3, wobei die Feststellungseinheit feststellt, dass das einmal beschreibbare Aufzeichnungsmedium ein gutes Aufzeichnungsmedium ist, wenn festgestellt wird, dass die durch die Messeinheit gemessene Fehlerrate nicht größer als ein vorgegebener Wert ist.

## Revendications

1. Procédé d'évaluation de support d'enregistrement pour enregistrer des données sur un support d'enregistrement ayant la forme d'un disque inscriptible une seule fois (1) permettant l'enregistrement de données sur celui-ci en blocs d'unités d'enregistrement, RUB, chaque RUB comportant une grappe de données précédée par une section de début occupant une période de 40 vobulations et servant de zone de liaison utilisée dans une commande de puissance automatique d'un laser et d'un oscillateur de fréquence variable pour stabiliser une boucle asservie en phase et suivie par une section de fin de 16 vobulations et d'une garde suivant la section de fin, dans lequel la section de début d'une RUB devant être nouvellement écrire chevauche la garde de la RUB déjà enregistrée, ledit procédé d'évaluation de support d'enregistrement comprenant les étapes consistant à :
enregistrer lesdites RUB nouvellement écrites sur ledit support d'enregistrement inscriptible une seule fois (1) en contiguïté avec la section de début de la RUB déjà enregistrée en commençant à l'adresse de départ de la garde de la RUB déjà enregistrée qui a été enregistrée immédiatement avant ;
reproduire lesdites RUB nouvellement écrites enregistrées à ladite étape d'enregistrement ;
mesurer un taux d'erreurs desdites RUB nouvellement écrites reproduites ; et
déterminer que ledit support d'enregistrement inscriptible une seule fois est un bon ou mauvais support d'enregistrement en comparant un résultat de ladite étape de mesure consistant à mesurer ledit taux d'erreurs à un critère prédéterminé.

2. Procédé d'évaluation de support d'enregistrement selon la revendication 1, dans lequel ladite étape de détermination comprend la détermination que ledit support d'enregistrement inscriptible une seule fois (1) est un bon support d'enregistrement s'il est établi que ledit taux d'erreurs mesuré à ladite étape de mesure n'est pas supérieur à une valeur prédéterminée.

3. Appareil d'enregistrement/reproduction fourni pour un support d'enregistrement ayant la forme d'un disque inscriptible une seule fois (1) permettant l'enregistrement de données sur celui-ci en blocs d'unités d'enregistrement, RUB, chaque RUB comportant une grappe de données précédée par une section de début occupant une période de 40 vobulations et servant de zone de liaison utilisée dans une commande de puissance automatique d'un laser et d'un oscillateur de fréquence variable pour stabiliser une boucle asservie en phase et suivie par une section de fin de 16 vobulations et d'une garde suivant la section de fin, dans lequel la section de début d'une RUB devant être nouvellement écrite chevauche la garde d'une RUB déjà enregistrée, ledit appareil d'enregistrement/reproduction comprenant :
une unité d'enregistrement/reproduction (55) pour enregistrer lesdites RUB nouvellement écrites sur ledit support d'enregistrement inscriptible une seule fois en contiguïté avec la section de début de la RUB déjà enregistrée en commençant à l'adresse de départ de la garde de la RUB déjà enregistrée qui a été enregistrée immédiatement avant ;
une unité de commande (60) pour commander à ladite unité d'enregistrement/reproduction (55) d'enregistrer lesdites RUB nouvellement écrites sur ledit support d'enregistrement inscriptible une seule fois (1) en contiguïté avec la section de début de la RUB nouvellement écrite en commençant à l'adresse de départ de la garde de la RUB déjà enregistrée qui a été enregistrée immédiatement avant et de reproduire lesdites RUB enregistrées ;
une unité de mesure pour mesurer un taux d'erreurs desdites RUB nouvellement écrites reproduites par ladite unité d'enregistrement/reproduction ; et
une unité de détermination pour déterminer que ledit support d'enregistrement inscriptible une seule fois est un bon ou mauvais support d'enregistrement (1) en comparant un résultat produit par ladite unité de mesure comme résultat de mesure dudit taux d'erreurs à un critère prédéterminé.

4. Appareil d'enregistrement/reproduction selon la revendication 3, dans lequel ladite unité de détermination détermine que ledit support d'enregistrement inscriptible une seule fois est un bon support d'enregistrement s'il est établi que ledit taux d'erreurs mesuré par ladite unité de mesure n'est pas supérieur à une valeur prédéterminée.
